Europäisches Patentamt

European Patent Office

Office européen des brevets

(11) Veröffentlichungsnummer : **0 059 971**
**B1**

# (12) EUROPÄISCHE PATENTSCHRIFT

(45) Veröffentlichungstag der Patentschrift :
28.08.85

(51) Int. Cl.⁴ : **H 01 B 13/00**

(21) Anmeldenummer : **82101838.9**

(22) Anmeldetag : **08.03.82**

(54) Verfahren zur Herstellung von ummantelten Kabeln sowie Vorrichtung zur Durchführung des Verfahrens.

(30) Priorität : **10.03.81 DE 3109101**

(43) Veröffentlichungstag der Anmeldung :
**15.09.82 Patentblatt 82/37**

(45) Bekanntmachung des Hinweises auf die Patenterteilung : **28.08.85 Patentblatt 85/35**

(84) Benannte Vertragsstaaten :
**BE CH FR GB IT LI LU NL SE**

(56) Entgegenhaltungen :
**FR-A- 840 026**
**FR-A- 848 495**
**FR-A- 902 739**
**GB-A- 687 088**
**US-A- 2 253 069**

(73) Patentinhaber : **Frischen, Franz, Phys.-Ing.**
**Kreppe 26**
**D-8359 Ortenburg (DE)**

(72) Erfinder : **Frischen, Franz, Phys.-Ing.**
**Kreppe 26**
**D-8359 Ortenburg (DE)**

(74) Vertreter : **Kador . Klunker . Schmitt-Nilson . Hirsch**
**Corneliusstrasse 15**
**D-8000 München 5 (DE)**

**Beschreibung**

Die Erfindung betrifft ein Verfahren zur Herstellung von elektrischen Kabeln, die einen äußeren Schutzmantel aus Metall sowie einen oder mehrere von Isoliermaterial umgebene elektrische Leiter aufweisen.

Kabel mit Metallrohrummantelung enthalten in der Regel einen bis sechs elektrische Leiter, die gegeneinander und bezüglich der Kabelummantelung mittels eines pulverförmigen Materials isoliert sind, welches auch bei höheren Temperaturen ausreichende Isolation bietet. Hierzu wird in den meisten Fällen Magnesiumoxidpulver verwendet, weil sich dieses Material besonders gut für die Herstellung der Kabel eignet. Die üblichen Herstellungsverfahren für derartige Kabel sind die sogenannten « Ziehverfahren », nach denen das Kabel unter Längenzunahme im Querschnitt vermindert wird, wobei das pulverförmige Isoliermaterial komprimiert wird.

Aus der GB-A-687 088 ist ein Verfahren bekannt, bei dem der Metallstreifen in seiner Längsrichtung kontinuierlich durch eine Form gezogen wird, welche bewirkt, daß der Streifen in zunehmendem Maße in Querrichtung gebogen wird. Zwischen den sich in Längsrichtung des gebogenen Streifens erstreckenden Längskanten wird aus einem Trichter das pulverförmige Isoliermaterial eingegeben. Zum Komprimieren des Isoliermaterials ist vor der Materialaufgabestelle eine mit dem fertigen Rohr fluchtende Stampfstange angeordnet, durch deren hohle Achse ein elektrischer Leiter in den gebogenen und mit Isoliermaterial beschickten Mantel eingeführt wird. Die Stampfstange wird hin- und herbewegt, so daß das Isoliermaterialpulver festgestampft wird. Im Anschluß an diesen Vorgang wird das so entstandene Kabel durch eine Ziehform gezogen, so daß der Durchmesser des Kabels verringert wird.

Dieses bekannte Verfahren ist insofern nachteilig, als eine Stampfstange eine gleichmäßige Komprimierung des Isoliermaterialpulvers nicht immer gewährleistet. Bei dem anschließenden Durchziehen des Rohres durch eine Ziehform zwecks Querschnittsverengung des Kabels wird das Isoliermaterialpulver Kräften ausgesetzt, die in Längsrichtung des Rohres wirken. Diese Kräfte tragen zur Komprimierung des Pulvers praktisch nicht bei. Das Isoliermaterialpulver wird zwar abschnittsweise komprimiert, jedoch wird das Pulver durch die Längskräfte aufgelockert, so daß die Isoliermaterialschicht keine gleichmäßige Festigkeit in Längsrichtung des Kabels besitzt. Bei dem Hindurchziehen des Metallstreifens durch die Ziehform wird der Streifen sehr stark plastisch verformt. Die zur dieser Verformung aufzubringenden Kräfte sind beträchtlich. Material und Dicke des Metallstreifens müssen folglich so gewählt werden, daß eine Beschädigung des Mantels durch die hohen Ziehkräfte nicht zu befürchten ist.

Aus der FR-A-848 495 ist in Übereinstimmung mit dem Oberbegriff des Anspruchs 1 ein Verfahren bekannt, bei dem das Rohr durch einzelne Ziehblöcke geleitet wird, deren Ziehöffnungsquerschnitte sich von Block zu Block verkleinern. Hierbei wird in einer Ausführungsform erreicht, daß die Längskanten des Metallstreifens sich in der zu einem Rohr gebogenen Form teilweise überlappen, wobei das Ausmaß der Überlappung umsomehr zunimmt, desto weiter der betreffende Mantelrohrabschnitt durch die Ziehvorrichtung hindurchgezogen ist. In einer speziellen Ausführungsform dieses bekannten Verfahrens ist die Breite des Metallstreifens derart auf den Endquerschnitt des Mantelrohres abgestimmt, daß die beiden Kanten des Metallstreifens im Endzustand des Mantelrohres stumpf gegeneinanderstossen. Die Schwierigkeit bei diesem bekannten Verfahren besteht einmal darin, daß sich die Kanten des Metallstreifens in erheblichem Maße überlappen, so daß das Mantelrohr an einigen Stellen relativ dick ist. Insgesamt ergibt siche eine unregelmäßige Dicke des Mantelrohres. Ist der Metallstreifen für das Mantelrohr so gewählt, daß die beiden Längskanten des Streifens stumpf gegeneinanderstossen, wenn das Rohr seine endgültige Dicke hat, so müssen die Abmessungen von Ziehblockquerschnitt einerseits und Metallstreifen andererseits sehr fein aufeinander abgestimmt sein. Dieses bekannte Verfahren hat mit dem oben erläuterten bekannten Verfahren gemäß der GB-A-687 088 den Nachteil gemeinsam, daß der Mantel sehr hohen Ziehkräften ausgesetzt ist, so daß Beschädigungen des Mantels zu befüchten sind.

Ein ähnliches Verfahren ist aus der FR-A-840 026 bekannt. Auch bei diesem bekannten Verfahren werden die zur Querschnittsverengung des Kabels und mithin zur Komprimierung des Isoliermaterialpulvers benötigten Kräfte durch eine das Kabel in Längsrichtung ziehende Ziehvorrichtung aufgebracht. Hierdurch ergeben sich die gleichen Nachteile, wie sie für die oben erläuterten bekannten Verfahren angegeben wurden.

Der Erfindung liegt die Aufgabe zugrunde, ein Verfahren der im Oberbegriff des Anspruchs 1 angegebenen Art derart weiterzubilden, daß das pulverförmige Isoliermaterial in einer Weise komprimiert wird, daß es im fertigen Zustand des Kabels an allen Stellen gleichmäßig stark komprimiert ist. Außerdem soll das Verfahren gewährleisten, daß der Mantel beim Komprimieren des Isoliermaterials nicht übermäßig stark beansprucht wird.

In Übereinstimmung mit dem kennzeichnenden Teil des Anspruchs 1 wird diese Aufgabe dadurch gelöst, daß zur Durchmesserreduzierung und gleichzeitiger Komprimierung des Isoliermaterials mit den Leitern das entstandene Rohr an den Flanschen reibschlüssig gefaßt und gegen ein Widerlager gezogen wird, daß die abstehenden Flansche gegebenenfalls, nachdem sie auseinandergebogen wurden, zumindest teilweise abgetrennt werden und daß die inneren, aneinergepreßten Kanten vor oder nach dem Abtrennvorgang verschweißt werden.

Der Grundgedanke der Erfindung liegt darin, das Komprimieren des Isolierpulvers dadurch zu bewerkstelligen, daß die Radialflansche in radialer Richtung gezogen werden, während das bis dahin entstandene Rohr gegen ein Widerlager gezogen wird. Durch diese Maßnahme wird erreicht, daß sich der Querschnitt des Rohres verkleinert und das Isoliermaterial dementsprechend komprimiert wird. Die hierbei auf den Mantel einwirkenden Kräfte sind weniger groß als bei den oben erläuterten Längs-Ziehverfahren, bei denen eine starke plastische Verformung unter Verringerung der Wandstärke des Metallmantels erfolgt. Bei dem erfindungsgemäßen Verfahren wird der Metallmantel hauptsächlich stärker gebogen. Da das Kabel praktisch keiner Längsverformung unterworfen wird, bleiben auch die Kabeladern beschädigungsfrei.

Vorteilhafte Weiterbildungen der Erfindung sind in den Unteransprüchen angegeben. Speziell betrifft der Anspruch 4 eine Vorrichtung zur Durchführung des erfindungsgemäßen Verfahrens.

Mit dem Verfahren bzw. der Vorrichtung nach der Erfindung können, abgesehen von normalen ummantelten Kabeln, auch Hochtemperatur-Dehnungsmeßstreifen, Temperaturmeßfühler und dergleichen hergestellt werden. Zur gleichzeitigen Erfassung von Dehnungen und Temperaturen können in den Kabeln auch Dehnungsmeßstreifen mit Temperaturfühlern auf Thermoelement- oder Widerstandsbasis kombiniert werden. Die Temperaturfühler können dabei noch zur Kompensation des Fehlers aus der scheinbaren Dehnung herangezogen werden.

Nachfolgend werden Ausführungsformen der Erfindung anhand der beigefügten Zeichnung beispielsweise bebeschrieben. Darin zeigen :

Figur. 1  die schematische Draufsicht auf eine Vorrichtung zur Durchführung des Verfahrens,

Figur 2  einen schematischen Längsschnitt durch die Vorrichtung, sowie Querschnitte an fünf verschiedenen Stellen der Längsachse der Vorrichtung,

Figur 3  eine schematische Draufsicht auf die im Fertigungsablauf letzten Stationen der Vorrichtung gemäß den Figuren 1 und 2,

Figur 4  einen Längsschnitt durch den Vorrichtungsteil der Fig. 3 mit Querschnitten and drei verschiedenen Stellen der Längsachse,

Figur 5  eine Draufsicht auf die letzten Stationen im Fertigungsablauf einer Vorrichtung in modifizierter Ausführung,

Figur 6  einen schematischen Längsschnitt durch den Vorrichtungsteil gemäß Fig. 5 und Querschnitte an fünf verschiedenen Stellen der Längsachse der Vorrichtung,

Figur 7  eine schematische Draufsicht auf eine weitere Ausführungsform der Vorrichtung,

Figur 8  einen schematischen Längsschnitt durch die Vorrichtung gemäb Fig. 7 mit Querschnitten an vier verschiedenen Stellen der Längsachse der Vorrichtung,

Figur 9a und b zeigen Zwischenstadien eines ummantelten Kabels zur Erzeugung von Meßwertwandlern,

Figur 10a, b, c zeigen die Verbindung des Meßwertwandlers gemäß den Fig. 9a und b mit einem ummantelten Kabel, das gemäß einer Modifikation des erfindungsgemäßen Verfahrens hergestellt wurde,

Figur 11  zeigt ein ummanteltes Kabel mit total integriertem Dehnungsstreifen und sich allmählich zum Dehnungsmeßstreifen hin verjüngendem Durchmesser.

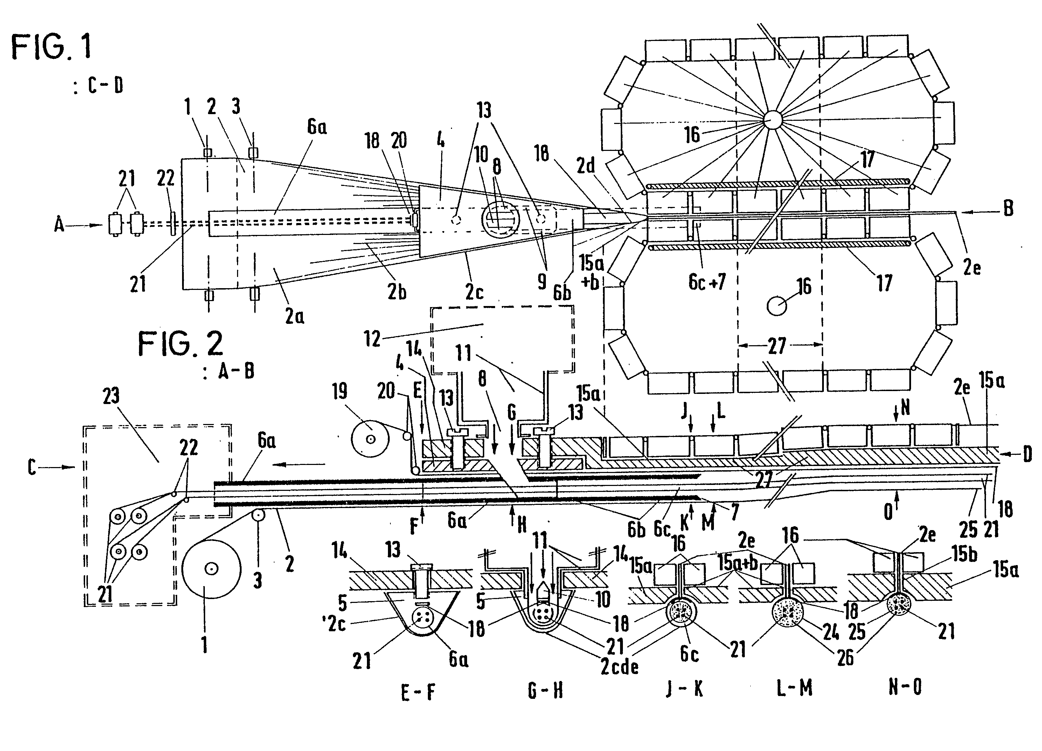

Gemäß Fig. 1 wird von der Rolle 1 ein Metall- oder Kunststoffband 2 abgezogen, das über eine Führungsrolle 3 zum Rohrform- und Rohrfüllkopf 4 geleitet wird. Dieser Kopf weist eine Formwanne oder Formbett 5 und ein darin durchgeführtes Rohr 6 mit einem Führungsabschnitt 6a, einem Formabschnitt 6b und einem Füllabschnitt 6c auf. Zwischen dem Bereich des Führungs- und Formabschnittes 6a, b befindet sich ein Füllstutzen 8, erweitert durch Seitenkanäle 9. Der Füllstutzen 8 steht mit einem geschlossenen Behälter 11 in Verbindung, welcher das Isoliermaterial enthält und in eine mit Helium gefüllte Druckkammer 12 integriert ist. Im Bereich des Füllstutzens 8 ist ein Steg 10 angeordnet, der einen bestimmten Bereich links und rechts einer mittleren Mantellinie abdeckt. Auf die Funktion dieses Steges wird nachfolgend noch eingegangen werden.

Im Rohrform- und Rohrfüllkopf 4 wird ein Metallblech- oder Kunststoffstreifen 2 zu einem Rohr (2a-d) geformt, wobei dessen freie Kanten als radial nach außen bzw. oben abstehende Flansche 2e umgebogen werden. Schnitt E-F zeigt Formbett 5 mit V-förmig herumgebogenem Streifen 2c, Schnitt G-H zeigt einen Querschnitt im Bereich des Füllstutzens 8, aus dem auch die Lage des Steges 10 ersichtlich ist.

Anschließend an den Rohrform- und Rohrfüllkopf 4 ist ein Klemmbacken-Karussel 16 angeordnet, das aus zwei in endloser Schleife geführten Klemmbacken-Ketten besteht, die, zwischen Führungsschienen 17 laufend, eine Förderstrecke definieren, in welcher die nach oben ragenden Flansche 2e des zu einem Rohr geformten Streifens 2 erfaßt und reibschlüssig gehalten werden.

Das Ende 7 des Führungs-, Form- und Füllrohres 6a, b, c, reicht bis in den Bereich der Klemmbacken hinein. Gleichlaufend mit der beschriebene Verformung des Streifens zu einem Rohr wird ein Abdeckband 18 von einer Rolle 19 über Führungsrollen 20 abgespult und durch den Rohrform- und Rohrfüllkopf 4 hindurch in das vorgeformte Rohr 2c, d mit Flansch 2e geleitet. Dabei wird das Abdeckband 18 so plaziert, daß es nach oben hin den durch die beiden Flansche 2e gebildeten Spalt abdeckt. Im Bereich des Füllstutzens 8 wird das Band durch den Steg 10 geschützt und geführt. In den Schnitten J-K, L-M und N-O ist die Lage des Streifens 2 gezeigt.

Synchron hierzu erfolgt das Einfädeln der Kabeladern 21 über die Führungsscheibenrollen 22. Aus der Druckkammer 23 heraus gelangen diese durch das abgeschlossene Führungs-, Form- und Füllrohr 6a, b, c, in das vorgeformte Kabelrohr 2c, d, e.

Die Füllung des Kabelmantels 24 mit Isoliermaterial 26 erfolgt über den Füllstutzen 8 und Seitenkanäle 9 (siehe Schnitt G-H und Fig. 2). Das Isoliermaterial gelangt nun über das Ende 7 des Füllrohres 6c in das fertig geformte Kabelrohr 24 mit den Flanschen 2e (siehe Schnitt L-M). Dieser Vorgang ist dosiert einstellbar über das zuvor im Rohr 24 existierende Vakuum einerseits und den Druck 12 im Isoliermaterialbehälter 11 andererseits, wobei kontinuierlich evakuiert wird. Hierbei wird das Abdeckband 18 automatisch an den Schlitz der Rohrwölbung vom Flansch 2e gepreßt, dichtet diesen ab und verhindert damit eine unter Umständen folgenschwere Verschmutzung durch das Isoliermaterial 26. Besonders im Hinblick auf die spätere Verschweißung des Kabelrohrmantels ist eine Verhinderung der Verschmutzung von Wichtigkeit. Die Einführung des Isoliermaterials durch das Füllrohr 6c in das Kabelrohr 24 kann durch Schräglage und eine geeignete Vibration des Führungs-, Form- und Füllrohres 6a, b, c und damit auch des Kabelrohres 24 unterstützt werden.

Zum Zwecke einer möglichst hohen Kompression des Isoliermaterials 26 im Kabelrohr 24 wird dieses an seinem Flansch 2e von entgegenläufigen Klemmbacken 16 des Klemmbacken-Karussels erfaßt, wobei die Klemmbacken zwischen den Führungsschienen 17 laufen und die Flansche 2e festklemmen. Das Kabelrohr 24 legt sich dabei an das Widerlager 15a an (siehe Schnitt L-M). Die Klemmbacken 16 laufen auf dem Widerlager 15a entlang, wobei der eingeklemmte Flansch 2e von den Klemmbacken 16 nach oben gezogen wird. Durch die langsam ansteigende Schräge 27 des Widerlagers wird der Flansch 2e nach oben gezogen und das Kabelrohr 24 entsprechend verjüngt bzw. dessen Durchmesser verringert (siehe Schnitt N-O). Dadurch, daß die Steigung 27 des Widerlagers kontinuierlich verstellbar ist, d. h. während des Fertigungsablaufes geändert werden kann, kann der Mantel des Kabelrohrs 24 eine konische Verbreiterung bzw. Verjüngung erfahren, wobei gleichzeitig die Füllungen des Kabelrohrs 24 mit Isoliermaterial 26 entsprechend dosiert und dem unterschiedlichen Durchmesser angepaßt werden kann. Um dabei größere Kabeldurchmesserdifferenzen zu überwinden, kann das Führungs-, Form- und Füllrohr 6a, b, c auch mehrteilig sein, d. h. aus mehreren ineinander geschachtelten Rohrschüssen bestehen, die teleskopartig auseinandergezogen werden können. Um den sich damit ändernden radialen Abstand des Form- und Füllrohres 6b, c gegenüber dem Widerlager 15a zu kompensieren, wird die Befestigungsplatte 14 gegenüber letzterem senkrecht verstellbar angeordnet. Analog dazu die Führungsscheibenrollen 22 der Kabeladern 21,

damit diese zentriert bleiben. Desgleichen wird das Abdeckband 18 zusätzlich über Führungsrollen geleitet. Damit werden alle Kombinationsmöglichkeiten maximal gewährleistet und es können in rascher Folge unterschiedliche Kabeldurchmesser sowie nahtlose Übergänge 58 von einem Kabeldurchmesser auf den anderen gefertigt werden, wobei die Dichte des Isoliermaterials 26 gleich oder auch unterschiedlich eingestellt werden kann.

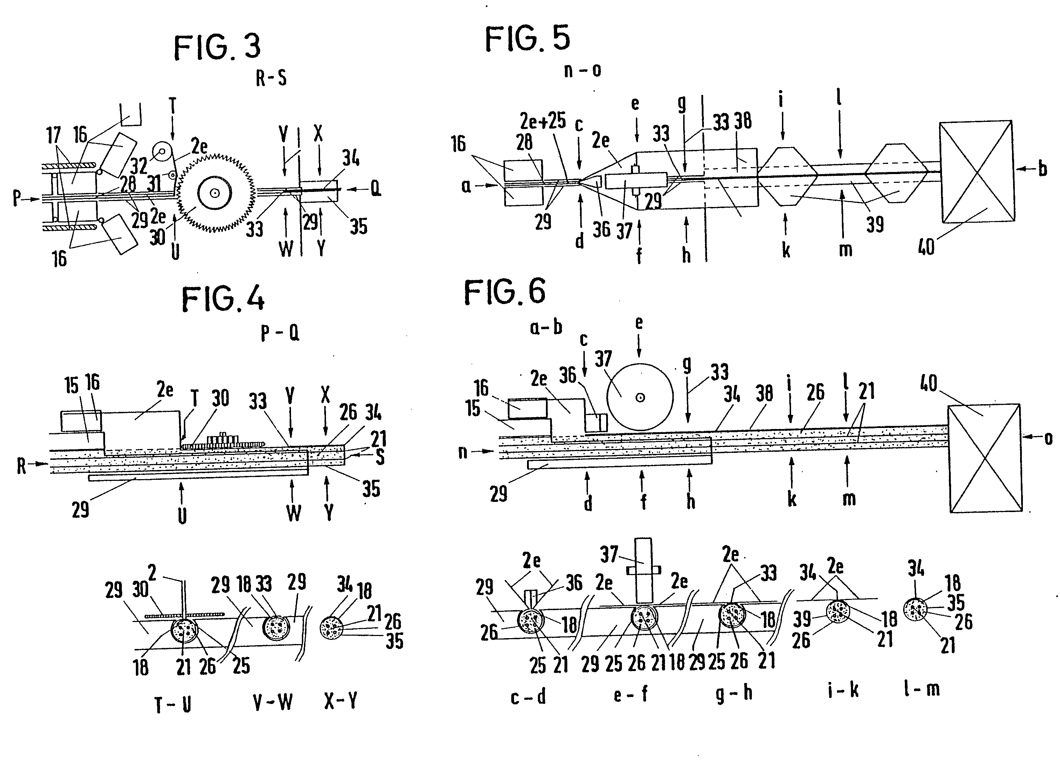

Nach dem Verlassen des Klemmbacken-Karussels 16 gelangt das Kabel 25 mit dem Flansch 2e am Ende 28 des Widerlagers 15a in eine Führungsrinne 29, welche mit ihren Backen das Kabel rundherum und zum Flansch 2e hin fest geschlossen hält. Ein waagrecht über der Führungsrinne angeordnetes Sägeblatt 30 schneidet die nach oben ragenden Flansche 2e ab, die über die Rollen 31 und 32 aufgespult werden. Die nunmehr freien Kanten des Rohres werden bei 33 verschweißt. Diese Stationen sind in den Figuren 3 und 4, sowie den Schnitten T-U, V-W und X-Y schematisch dargestellt. Das fertige Rohrmantelkabel 35 verläßt die Führungsrinne 29 und wird aufgespult. Statt der Führungsrinne 29 kann natürlich auch ein weiteres entsprechend ausgeformtes Klemmbacken-Karussel angewendet werden.

Eine weitere Ausführungsform des Verfahrens bzw. einer geeigneten Vorrichtung ist in den Figuren 5 und 6 mit den zugeordneten Schnitten c-d, e-f, g-h, i-k, und l-m dargestellt. Dabei gelangt das Kabel 25 mit dem Flansch 2e am Ende 28 des Widerlagers ebenfalls in eine Führungsrinne 29, wie dies zuvor erklärt wurde. Dann klappt ein Keil 36 die Flansche 2e auseinander und ein nachfolgendes Walzrad 37 drückt die Flansche vollends flach in eine zum Rohrkabel tangentiale Ebene. Dann durchläuft dieses eine Schweißstation, wobei bei 33 die Falzkanten verschweißt und damit die Flanschteile 2e hermetisch dicht mit dem Kabelrohrmantel verbunden werden. Das fertige Rohrmantelkabel 38 mit dem Flansch 2e verläßt die Führungsrinne. Der Flansch 2e, der eine spätere Installation wesentlich erleichtert, kann noch ausgestanzt werden (bei 39 gezeigt), wodurch das Kabel flexiber wird. In einer nachgeschalteten Station 40 wird ein Glühprozeß zur Entspannung durchgeführt, mit anschließender Reinigung und Prüfung des Kabels.

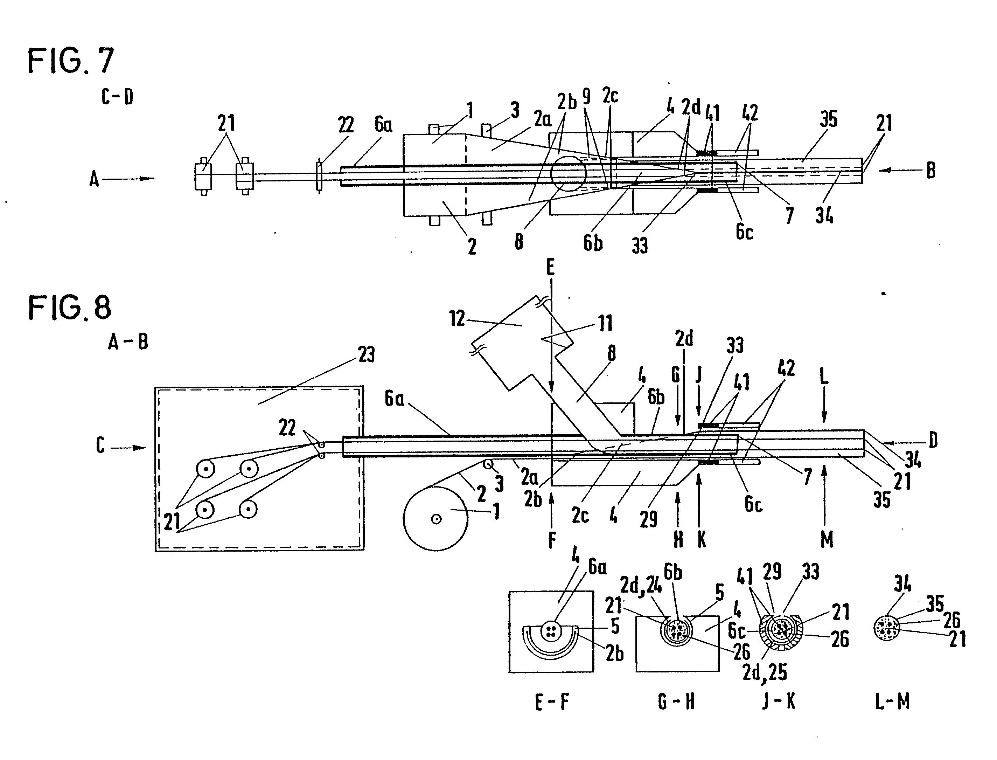

In den Figuren 7 und 8 ist eine weitere Variante einer Vorrichtung zur Durchführung des erfindungsgemäßen Verfahrens dargestellt.

Die Kabeladern 21 laufen aus dem Druckbehälter 23 über Führungsscheibenrollen 22 in das Führungs-, Form- und Füllrohr 6a, b, c ein, bzw. werden in das Rohr eingezogen. Dieses durchsetzt wie bereits vorstehend beschrieben, den Rohrform- und Rohrfüllkopf 4. Allerdings ist in diesem Fall die Formwanne bzw. Formbett 5 nicht als Außenkontur, sondern als Rinne ausgebildet, in der der von der Rolle 1 abgespulte Metallstreifen zwangsgeführt und allmählich in eine kreisrunde Form gebracht wird. Im Bereich 6b des Füllrohres mündet der Einfüllstutzen 8 für das Isoliermaterial, der vom Behälter 11 gespeist wird, welcher wiederum mit der Druckkammer 12 in Verbindung steht.

Das Isoliermaterial wird mit Unterstützung der Druckunterschiede zwischen den Druckkammern 12 und 23 und dem Vakuum, welches die übrige Vorrichtung umgibt, in das Innere des Füllrohres 6c eingespeist und umgibt die Kabeladern 21 gleichmäßig von allen Seiten. Diese Station ist in dem Schnitt G-H dargestellt, aus dem gut ersichtlich ist, wie der fast zu einem Vollkreis vorgeformte Streifen 2d/24 den Abschnitt 6b des Füllrohres 6c umgibt.

Im weiteren Verlauf wird das Mantelrohr weiter rohrförmig zusammengebogen, bis sich die freien Kanten unmittelbar gegenüberstehen. Auch diese Phase findet noch im Bereich des Endes 7 des Füllrohres 6 statt (siehe Schnitt J-K). Nun erfolgt eine Verschweißung der freien Kanten bei 33 unter Bildung einer Schweißnaht 34 (vgl. Schnitt J-K). Erst nach Verschweißung der Längsnaht endet das Füllrohr 6 an der Stelle 7. Vorzugsweise ist das Ende 7 des Füllrohres 6 so angeflacht, daß der Durchmessersprung beim Verlassen des Füllrohres keinen ungünstigen Einfluß auf die Packungsdichte des Isoliermaterials hat. Es gibt andererseits eine Reihe von Anwendungsfällen, bei denen die Packungsdichte nicht so hoch sein muß, wie es beispielsweise bei der Fertigung von Röhrchen mit eingelagerten Dehnungsmeßdrähten erforderlich ist, so z. B. bei reinen Mantelkabeln, Thermoelementen, Widerstandsthermometern usw. Als Variante dieses Verfahrens ist es auch möglich, den Streifen spiralig zusammenzudrehen bzw. zu schieben und noch im Bereich des Füllrohres zu verschweißen.

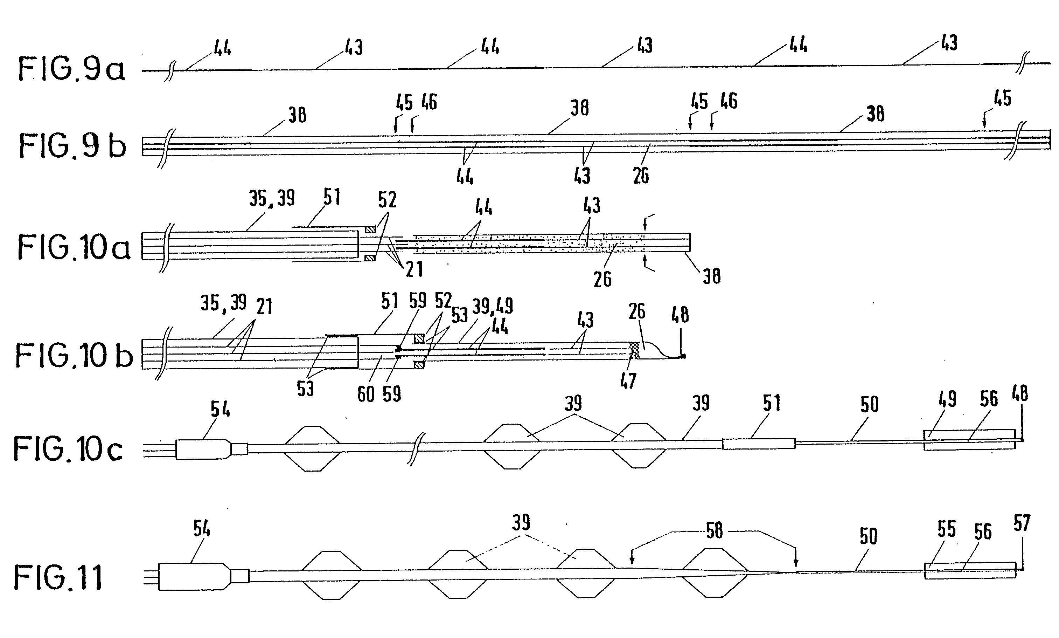

Mit dem erfindungsgemäßen Verfahren lassen sich ohne Änderungen der Vorrichtung auch Meßwertwandler, wie zum Beispiel Dehnungsmeßstreifen, Widerstandsthermometer, Thermoelemente u. a. m. herstellen. Auch Kombinationen davon in ein- und demselben Kabelmantelrohr (siehe Figuren 9 und 10) sind möglich. Figur 11 zeigt beispielsweise ein sich konisch erweiterndes Kabel mit total integriertem Meßfühler, dessen Herstellung mit dem neuen Verfahren ebenfalls möglich ist.

Nachfolgend soll die Herstellung eines Dehnungsmeßstreifens beschrieben werden. Zunächst wird gemäß Fig. 9a ein Dehnungsdraht 43 in vorgegebenen Abständen mit vergoldeten Bereichen 44 versehen. Zwei gleiche Drahtlängen des vorbereiteten Dehnungsdrahtes werden unter Anwendung des zuvor beschriebenen Fertigungsverfahrens zu einem Rohrmantelkabel 38 verarbeitet (Fig. 9b). Das Kabel 38 wird nun bei 45 (Fig. 9b) aufgeschnitten und ergibt somit die X-Meßstreifen (10a). Jetzt wird der Kabelmantel 38 über eine bestimmte Länge entfernt (entsprechend der Distanz zwischen den Bezugsziffern 45 und 46 in Fig. 9b), wodurch die vergoldeten Dehnungsmeßstreifendrähte 44 sichtbar werden. Am anderen Ende wird das Isoliermaterial 26 mittels feinstkörniger Sandstrahlung herausgeblasen, wie dies durch Pfeile angedeutet ist. Damit werden die beiden Dehnungsdrähte 43 bloßgelegt, die mittels einer Kondensatorentladung miteinander zu einer Schlaufe verschweißt werden. Die überstehenden Enden werden abgeschnitten und das Röhrchen mit einem Siegelpfropfen 47 verschlossen. Der Rest des Rohrmantels wird zur Hälfte mit dem Isoliermaterial 26 aufgefüllt und durch eine Quetschschweißung 48 verschlossen. Der so gefertigte Dehnungsmeßstreifen 49 wird nun in bekannter Weise mit einem Kabel 35 oder 39 in 3-Leiterschaltung mittels einer Verbindungsmuffe 51 verbunden, die Drahtenden 21 und 44 werden bei 59 miteinander verschweißt. Die Muffe 51 wird einerseits mit dem Kabel 35/39 bei 53 und andererseits mit dem Rohr 39/49 des Dehnungsmeßstreifens verschweißt (siehe Fig. 10b). Damit ist ein Dehnungsmeßstreifen mit integriertem Kabel geschaffen, dessen tatsächliche Größe und Aussehen Fig. 10c wiedergibt.

In Fig. 11 ist ein Dehnungsmeßstreifen mit total integriertem Kabel und konischem Übergang 58 vom Kabel 39 zum Dehnungsmeßstreifen 55/56 abgebildet. Der Dehnungsmeßstreifen weist gemäß einer zuvor beschriebenen Verfahrensvariante integrierte Befestigungsflansche 55 auf. Die Anwendung des erfindungsgemäßen Verfahrens erlaubt die Fertigung eines solchen integrierten Kabels mit Meßwertwandler in ein und demselben Fertigungsgang.

## Patentansprüche

1. Verfahren zur Herstellung von elektrischen Kabeln, die ein äußeres Mantelrohr aus Metall sowie einen oder mehrere von Isoliermaterial umgebene elektrische Leiter (21) aufweisen, bei dem ein bandförmiger Metallstreifen der Länge nach mit Abstand um die Leiter zu einem Metallrohr (24) geformt wird, die Längskanten zu zwei benachbarten radial nach außen gerichteten, achsparallelen Flanschen (2e) gebogen werden, ein pulverförmiges Isoliermaterial (26) in den noch nicht völlig geschlossenen Mantelinnenraum eingefüllt wird und anschließend der Mantel unter Durchmesserreduzierung geschlossen und komprimiert wird und die Längskanten des Metallstreifens miteinander verbunden werden, dadurch gekennzeichnet, daß zur Durchmesserreduzierung und gleichzeitiger Komprimierung des Isoliermaterials (26) mit den Leitern (21) das entstandene Rohr (2d) an den Flanschen (2e) reibschlüssig gefaßt und gegen ein Widerlager (15a) gezogen wird, daß die abstehenden Flansche (2e) ggf. nachdem sie auseinandergebogen wurden, zumindest teilweise abgetrennt werden, und daß die inneren, aneinandergepreßten Kanten vor oder nach dem Abtrennvorgang verschweißt werden.

2. Verfahren nach Anspruch 1, dadurch gekennzeichnet, daß die Innenseite des Metallstreifens (2) vor dem Einbringen der Leiter (21) in das Mantelrohr (24) isoliert wird.

3. Verfahren nach Anspruch 1 oder 2, dadurch gekennzeichnet, daß gleichzeitig mit der Formung des Metallrohres um die Leiter, d. h. vor dem Zusammenklemmen der Flansche (2e), ein Abdeckband (18) in das Metallrohr (24) eingebracht wird, welches den achsparallelen Spalt zwischen den Flanschen (2e) bzw. den Längskanten des Metallrohres (24) überdeckt.

4. Vorrichtung zum Druchführen des Verfahrens nach einem der Ansprüche 1 bis 2, gekennzeichnet durch folgende Merkmale :

— zum Formen des Metallrohres (24) ist eine Formwanne (5) vorgesehen, die der Metallstreifen durchläuft und die auf der Oberseite offen ist,

— an die Formwanne (5) schließt das mit einem Schlitz (15a) versehene Widerlager (15) an,

— auf der dem Rohr gegenüberliegenden Seite des Schlitzes (15a) befindet sich eine Klemmbackenführung (17), in der auf beiden Seiten des Schlitzes Klemmbackenpaare (16) zweier Klemmbackenkarussells geführt werden, derart, daß die Klemmbacken (16) je eines Klemmbackenpaares zwischen sich die Flansche (2e) des entsandenen Rohres einklemmen, und

— die dem Rohr abgewandte Oberfläche des Widerlagers (15) hat einen in Bewegungsrichtung der Klemmbacken (16) zunehmenden Abstand von dem Rohr, d. h. von der Unterseite des Widerlagers, an der das Rohr anliegt.


**Claims**

1. A method of producing electrical cables comprising an outer sheath-tube made of metal and one or more electrically conductive leads (21), wherein a tape-shaped metal sheet is bent lengthwise in a distance around the leads to form a metal tube (24), the edges are bent to form two adjacent outwardly extending flanges (2e) parallel to the axis, an insulating material (26) which is in powdered form is filled into the inner space of the sheath which is not completely closed and thereafter the sheath is closed whereby the diameter thereof is reduced and compressed, and the edges of the sheet metal are connected with oneanother characterized in that for reducing the diameter and for simultaneously compressing of the insulating material (26) together with the lead (21) the resulting tube (2d) is gripped at the flanges (2e) in frictional engagement and drawn against an abutment (15a), that the extending flanges (2e) are — after bending apart, if necessary — at the least partially severed, and in that the inner edges which are pressed together are welded together before or after said severing process.

2. Process according to claim 1, characterized in that the inner sides of the sheet metal (2) are insulated before inserting the leads (21) into the sheat tube (24).

3. Process according to claim 1 or 2, characterized in that simultaneously with forming of the metal tube around the leads, i. e. before clamping the flanges (2e) together, a cover band (18) is inserted into the metal tube (24) which covers the gap between the flanges (2e) or the edges of the metal tube (24), respectively.

4. A device for carrying out the method according to one of claims 1 or 2, characterized in the following features :

— for forming the metal tube (24) a molding bed (5) is provided which is passed by the sheet metal and which has an open top side,

— the molding bed (5) is joined by the abutment having a slit (15a),

— at the side of the slit (15a) opposite to the tube a jaw guiding means (17) is provided in which at both sides of said slit jaw pairs (16) of two jaw carousels are guided such that the jaws (16) of each pair of jaws grip said flanges (2e) of the formed tube, and

— the surface of the abutment (15) opposite to the tube is provided with an increasing distance with respect to said tube, i. e. with respect to the bottom side of the abutment which is contacted by the tube in the moving direction of the jaws (16).


**Revendications**

1. Procédé de fabrication de câbles électriques qui comportent une gaine tubulaire extérieure en métal ainsi qu'un ou plusieurs conducteurs électriques (21) entourés par une matière isolante, dans lequel une bande métallique est profilée sur sa longueur sous forme d'un tube métallique (24) entourant à distance les conducteurs, les bords longitudinaux de la bande sont pliés pour former deux ailes adjacentes, parallèles à l'axe et dirigées radialement vers l'extérieur, une matière isolante sous forme de poudre (26) est introduite dans le volume intérieur de la gaine encore non complètement fermée et ensuite la gaine est fermée avec réduction de son diamètre et comprimée et les bords longitudinaux de la bande métallique sont reliés entre eux, caractérisé en ce que, en vue d'une réduction de diamètre et une compression simultanée de la matière isolante (26) et des conducteurs (21), le tube obtenu (2d) est saisi par friction sur les ailes (2e) et tiré contre un contre-appui (15a), en ce que les ailes dépassantes (2e) sont au moins partiellement sectionnées, le cas échéant, après avoir été écartées l'une de l'autre, et en ce que les bords intérieurs de la bande, appliquées l'un contre l'autre, sont soudés avant ou après l'opération de sectionnement.

2. Procédé selon la revendication 1, caractérisé en ce que le côté intérieur de la bande métallique (2) est isolé avant l'introduction des conducteurs (21) dans la gaine tubulaire (24).

3. Procédé selon la revendication 1 ou 2, caractérisé en ce que, en même temps que le formage du tube métallique autour des conducteurs, c'est-à-dire avant le serrage des ailes (2e), une bande de recouvrement (18) est introduite dans le tube métallique (24) de façon à recouvrir l'intervalle parallèle à l'axe existant entre les ailes (2e) ou les bords longitudinaux du tube métallique (24).

4. Dispositifs pour la mise en œuvre du procédé selon l'une des revendications 1 et 2, caractérisé par les particularités suivantes :

— pour le formage du tube métallique (24), il est prévu un auget de formage (5) dans lequel passe la bande métallique et qui est ouvert sur le côté supérieur ;

— à la suite de l'auget de formage (5), est disposé le contre-appui (15) pourvu d'une fente (15a) ;

— du côté de la fente (15a) qui est opposé au tube, il est prévu un guide à mâchoires de serrage (17), dans lequel sont guidées des deux côtés de la fente des paires de mâchoires de serrage (16) de deux carrousels à mâchoires de serrage, de telle sorte que les mâchoires de serrage (16) de chaque paire de mâchoires de serrage serrent entre elles les ailes (2e) du tube formé ; et

— la surface, opposée au tube, du contre-appui (15) présente, par rapport au tube, c'est-à-dire par rapport au côté inférieur du contre-appui sur lequel s'applique le tube, un espacement augmentant dans la direction de déplacement des mâchoires de serrage (16).

FIG. 1

FIG. 2

FIG.5

FIG.3

FIG.6

FIG.4

FIG. 7

C–D

FIG. 8

A–B

E–F  G–H  J–K  L–M

FIG.9 a

FIG.9 b

FIG.10 a

FIG.10 b

FIG.10 c

FIG.11

0 059 971